# EUROPEAN PATENT APPLICATION

(11) **EP 1 939 571 A2**
(43) Date of publication of application: **02.07.2008**
(21) Application number: 07116977.5
(22) Date of filing: 21.09.2007
(51) Int. Cl.: F28D 9/00, F28D 21/00, F28F 13/06, F24F 3/147

(54) **Heat exchange element for ventilating apparatus**

(30) Priority: 28.12.2006 KR 20060135856
(71) Applicant: LG Electronics Inc., Seoul, 150-721 (KR)
(72) Inventor: HAN, Sung Won, Seoul (KR); KIM, Kyung Hwan, 103-1901 Moraksan Hyundai Apt., Gyeonggi-do (KR); PARK, Jong Hoon, Gyeongsangnam-do (KR); LEE, Woo Ram, 152-848, Seoul (KR)
(74) Representative: Vossius & Partner

(57) **Abstract**

A heat exchange element of a heat exchanger prevents losses due to internal pressure non-uniformity. The heat exchanger includes a plurality of heat exchange sheets (3,211,212) which are stacked together. A plurality of airflow guide ribs (4,5,212a,212b,212c) located between the sheets (3,211,212) have connection passages (40,50) that allow gases to flow between adjacent ducts. The flow of gasses through the connection passages (40,50) offsets pressure non-uniformity between adjacent ducts. Also, the ribs can be continuously arranged over the length of the heat exchange ducts to increase an area supporting the heat exchange sheets, and thus the sag phenomenon of the heat exchange sheet can be prevented.

## Description

The present disclosure relates to a heat exchanger used in a ventilating apparatus. In particular, the present application discloses heat exchange plates which can be stacked to form a heat exchanger.

A ventilating apparatus can be used for ventilating an enclosed space. The ventilating apparatus is designed to perform a heat exchange operation in which heat is exchanged between incoming outdoor air and outgoing indoor air before the outdoor air is introduced to the enclosed space. In other words, the ventilating apparatus is a kind of air conditioning apparatuses that ventilates the room such that indoor temperature does not decrease or increase abruptly, even though outdoor air is introduced during the ventilation process.

The ventilating apparatus is configured with a plurality of ducts which can be arranged to cross one another or which can be arranged in parallel. The outdoor air and the indoor air flow in opposite directions through adjacent ducts to accomplish the heat exchange operation.

An important performance factor in this type of ventilating apparatus is to maintain the temperature and humidity of air within the enclosed space. This is accomplished by conducting a heat and moisture exchange operation so that the temperature and humidity of air being sent into the enclosed space is almost equal to that of air being removed from the space.

To this end, the ducts of the heat exchanger must have maximum heat transfer efficiency and moisture permeability. It also helps to form the ducts so that they are as fine and compact as possible for contacting air over the broadest surface area.

In addition to the above, it is desirable to have the heat exchanger produce minimum noise and minimum power consumption in introducing fresh outdoor air and exhausting indoor air for ventilation. For the minimum noise and power consumption, the conduit resistance of an internal heat exchange duct must be low. Unfortunately, as the heat exchanger is configured for maximum heat and moisture exchange, noise and power consumption go up.

In an attempt to balance all of the above factors, a variety of shapes and duct materials have been developed. A related art heat exchange duct is provided with heat exchange "sheets," and ribs between the sheets help to maintain the multi-stacked arrangement of the heat exchange sheets. Main heat exchange is performed by heat transfer through the sheets. Likewise, moisture exchange is accomplished by moisture permeation between the sheets.

The heat exchange sheets may be made of thin paper, and thus the heat exchange sheets may sag if they absorb moisture. The ribs, which help to support the sheets, are attached to the heat exchange sheets in molten resin form and are then cured. The ribs between the sheets form ducts with the heat exchange sheets and the air flows through these ducts. Different gases (these gases would typically be the outdoor air and the indoor air) flow on opposite sides of each sheet in such a way that they cross each other, or flow in opposite directions In background art heat exchangers, pressure or flow velocity is not uniform in each duct, or even at different locations within the same duct. These localized flow differentials can degrade performance.

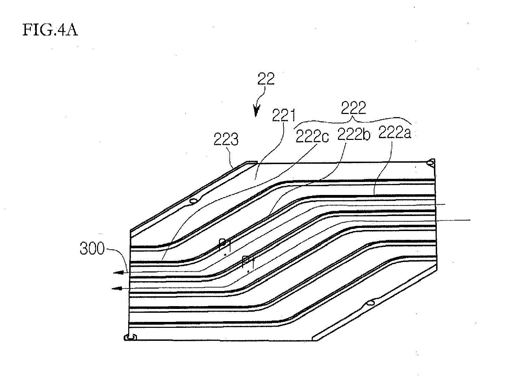

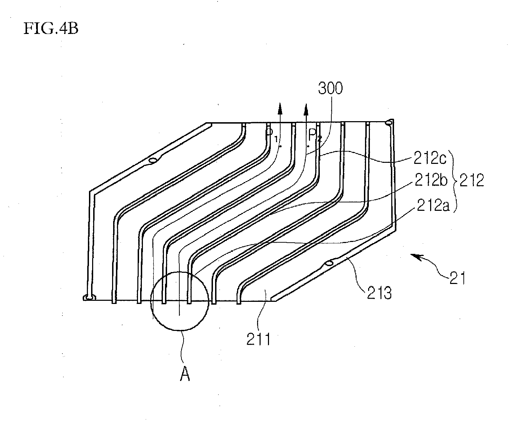

Figs. 4A and 4B are exploded perspective views illustrating the constitution of a background art heat exchange element. Referring to Figs. 4A and 4B, an intake heat exchange element 21 and an exhaust heat exchange element 22, which have hexagonal shapes, are alternately stacked. Intake passages and the exhaust passages are formed between the intake heat exchange elements 21 and the exhaust heat exchange elements 22.

The intake heat exchange element 21 includes a heat exchange sheet 211 made of thin paper material. Guide ribs 212 are disposed on one side of a heat exchange sheet 211 such that they are spaced apart by predetermined distances. A frame 213 is provided on edge portions of the heat exchange sheet 211 to maintain the shape of the intake heat exchange element 21.

The guide rib 212 is divided into three sections, i.e., an outdoor air intake section 212a, an intermediate section 212b and an outdoor air exhaust section 212c. The outdoor air intake section 212a and the outdoor air exhaust section 212c are disposed at opposite ends of the intermediate section 212c. The introduction guide rib 212 is formed such that the outdoor air intake section 212a and the outdoor air exhaust section 212b extend at a predetermined angle with respect to the intermediate section 212b.

Similar to the intake heat exchange element 21, the exhaust heat exchange element 22 includes a heat exchange sheet 221, and exhaust guide ribs 222 attached to one side of the heat exchange sheet 221. A frame 223 surrounds the heat exchanger sheet 221. The exhaust guide ribs 222 are also configured with an intake portion 222a, a straight intermediate portion 222b and an exhaust portion 222c.

The intermediate portions 221b and 222b of the intake and exhaust sheets are parallel to one another. However, the intake portions 222a and the exhaust portions 222c of the exhaust guide ribs 222 cross the intake portion 212a and the exhaust portion 212c of the introduction guide rib 212.

In the intermediate sections of the introduction and exhaust guide ribs 212 and 222, where the heat exchange operation is most effectively performed, incoming air and outgoing air flow in parallel and opposite directions to each other. This makes it possible to increase heat exchange efficiency as much as possible. That is, the outdoor air and the indoor air exchange heat with each other best in the straight portions 212b and 222b. The longer the straight portions are, the better the heat exchanger. However, the longer the straight portions get, the lower the flow velocity becomes.

In Fig. 4A, reference symbol P ↑ denotes a section where air velocity decreases, but pressure temporarily increases. This is undesirable, and it typically occurs at bent portions of the ribs where the air flow must change direction. The increased pressure results in lowering the flow velocity. This is called a pressure loss. The pressure loss caused by such a local pressure increase is dependent upon a turning angle and a length of a bent portion of the duct. For example, referring to Fig. 4B, residual pressures P₁ and P₂ of air in adjacent ducts at exhaust ends are different from each other.

The embodiments will be described in detail with reference to the following drawings, in which like reference numerals refer to like elements, and wherein:

Fig. 1 is a perspective view illustrating an internal structure of a ventilating apparatus ;

Fig. 2 is a sectional view illustrating introduction/exhaust of outdoor air in the ventilating apparatus of Fig. 1;

Fig. 3 is a sectional view illustrating introduction/exhaust of indoor air in the ventilating apparatus of Fig. 1;

Figs. 4A and 4B are perspective views illustrating the constitution of a related art heat exchange element.

Fig. 5 is a plan view of an embodiment of a heat exchange plate redressing disadvantages of the related art heat exchange plate of Figs. 4A and 4B.

Fig. 6 is an enlarged view of a portion of an embodiment of a heat exchange element corresponding to part A of Fig. 4B;

Fig. 7 is an enlarged view of a portion of an embodiment of a heat exchange element corresponding to part A of Fig. 4B; and

Figs. 8, and 9A to 9C are views illustrating modified shapes and arrangments of ribs of various embodiments of heat exchange elements.

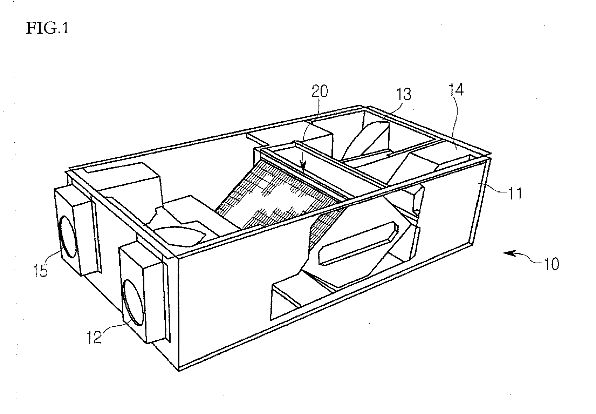

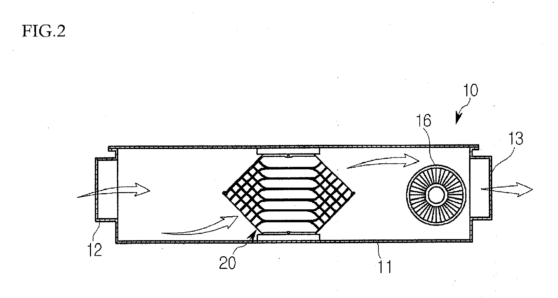

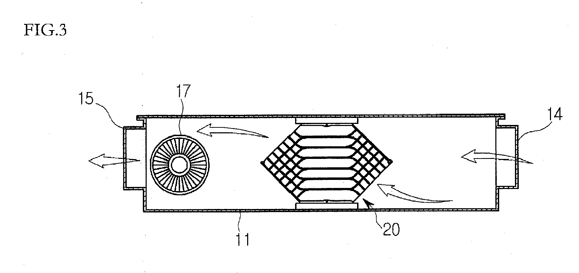

Fig. 1 is a perspective view illustrating an internal structure of a ventilating apparatus 10. Referring to Fig. 1, the ventilating apparatus 10 includes a case 11 forming an external shape, and a heat exchanger 20. As shown in Fig. 2, an intake fan 16 is configured to introduce outdoor air into a room. As shown in Fig. 3, an exhaust fan 17 is configured to blow indoor air to the outside. The heat exchanger 20 conducts a heat and moisture exchange operation between incoming outdoor air and outgoing indoor.

An intake air inlet 12 introduces outdoor air and an exhaust air outlet 15 exhausts indoor air to the outside. At the other side of the case 11, an intake air outlet 13 discharges the introduced outdoor air to the indoor space, and an exhaust air inlet 14 introduces the indoor air into the ventilating unit.

An intake passage is provided between the intake air inlet 12 and the intake air outlet 13. Here, the heat exchanger 20 intervenes in the middle of the intake passage. An exhaust passage is also provided between the exhaust air inlet 14 and the exhaust air outlet 15. Likewise, the heat exchanger 20 also intervenes in the middle of the exhaust passage. The outdoor air introduced through the intake air inlet 12 and the indoor air introduced through the exhaust air inlet 14 exchange heat and moisture with each other, without being mixed, while passing through the heat exchanger 20.

Fig. 2 is a sectional view illustrating the introduction/exhaust of outdoor air in the ventilating apparatus 10 of Fig.1. Fig. 3 is a sectional view illustrating the introduction/exhaust of indoor air in the ventilating apparatus 10 of Fig. 1. Referring to Fig. 2, the intake fan 16 is mounted inside the duct at a side of the intake air outlet 13 to introduce the outdoor air. In detail, the outdoor air is introduced through the intake air inlet 12 by the operation of the intake fan 16, and is then heat exchanged with the indoor air while passing through the heat exchanger 20.

Referring to Fig. 3, the exhaust fan 17 is mounted inside the duct at a side of the exhaust air outlet 15 to introduce the indoor air. In detail, the indoor air is introduced through the exhaust inlet 14 by the operation of the exhaust fan 17, and the indoor air is then heat exchanged with the outdoor air while passing through the heat exchanger 20.

The heat exchanger 20 includes a plurality of stacked heat exchange plates. The heat exchange plates are configured such that guide ribs are disposed between heat exchange sheets. The stacked structure of the heat exchange sheets and the guide ribs form ducts which guide the introduced indoor air and outdoor air. The ducts through which the indoor air flows and the ducts through which the outdoor air flows are cross-arranged at left and right sides of the heat exchanger, respectively. Therefore, the outdoor air and the indoor air can exchange heat and moisture with each other, without being mixed, while they pass through the heat exchanger 20.

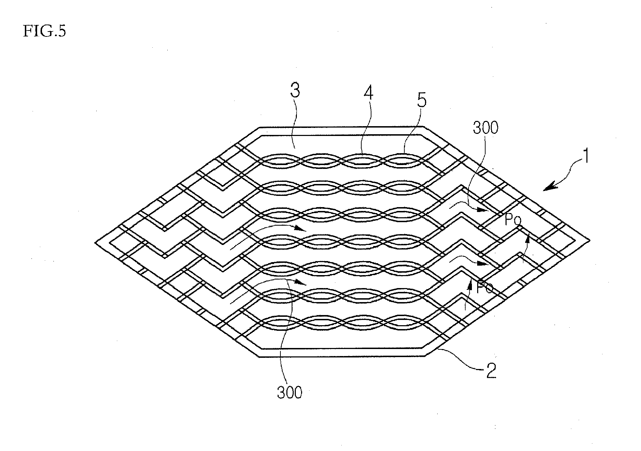

Figs. 5-9c illustrate various embodiments of heat exchange plates that redressing disadvantages of the related are heat exchange plates shown in Figs. 4A and 4B.

The heat exchange elements are designed to solve flow rate non-uniformity caused by pressure non-uniformity at air intake and exhaust ends. In preferred embodiments, the heat exchanger is shaped like a quadratic prism or a hexagonal prism. The heat exchanger has a structure in which a plurality of heat exchange sheets stacked.

In some embodiments, ribs would only be formed on one side of each heat exchange sheet. In other embodiments, ribs are disposed on both sides of each heat exchange sheet. When ribs are formed on both sides of a sheet, each heat exchange plate would include a heat exchange sheet, a plurality of first ribs arranged on one surface of the heat exchange sheet and guiding a first gas flowing along the first surface of the heat exchange sheet, and a plurality of second ribs arranged on the opposite surface of the heat exchange sheet. The second ribs would guide a second gas flowing along the opposite surface of the heat exchange sheet.

Referring to Fig. 5, the heat exchange plate 1 includes a heat exchange sheet 3, a frame 2 surrounding the heat exchange sheet 3, an introduction guide rib 4 disposed on one side of the heat exchange sheet 3, and an exhaust guide rib 5 disposed on the other side of the heat exchange sheet 3.

Some of the guide ribs are intermittently arranged at intake and exhaust ends of the intake and exhaust guide ribs 4 and 5, as illustrated in Fig. 5. That is, the guide ribs are spaced apart at regular intervals so that the introduced or exhausted air flows dispersedly. By virtue of the guide rib structure, intake air is introduced along a plurality of ducts, and exhausted along a plurality of ducts, which makes it possible to reduce pressure loss at air intake and exhaust ends.

Even in the heat exchange plate having the above configuration, since a predetermined portion of the heat exchange sheet on which the guide ribs are not disposed cannot be supported by the ribs over a wide area, the heat exchange sheet may sag due to moisture contained in the introduced outdoor or indoor air or due to the aging of the heat exchange sheet itself. This sag phenomenon of the heat exchange sheet can cause a portion of the duct to be more narrow than desired (i.e., the height of the duct decreases in a viewing direction of the drawing.)

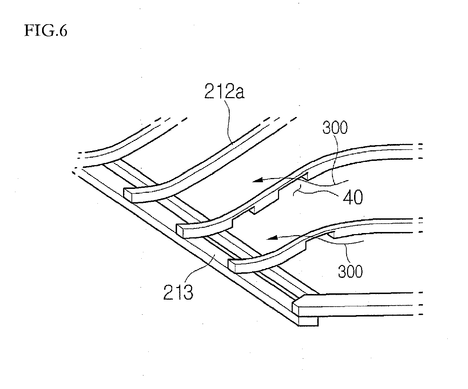

Fig. 6 is an enlarged view of guide ribs on a first embodiment of a heat exchange sheet. The portion illustrated in Fig. 6 corresponds to the portion circled A in Fig. 4B. Although this portion corresponds to the intake portion for air flowing in from outside, the features shown in Fig. 6 can be applied to the intake and exhaust portions of guide ribs guiding both indoor and outdoor air.

Referring to Fig. 6, a communication hole 40 of a predetermined size is provided on the first rib 212. Specifically, the communication hole 40 is formed such that a surface contacting the heat exchange sheet is recessed or removed to a predetermined depth. The resulting communication hole 40 enables the gas flowing along the ducts between the guide ribs to be divided and to flow into adjacent ducts when a local pressure increase of the first gas occurs (usually due to a directional change. Therefore, it is possible to improve pressure distribution and uniformity within the ducts and thereby minimize flow losses.

The guide rib is continuously formed without interruptions because the communication hole 40 is provided in the guide rib. Therefore, an area of the paper sheet that the ribs support can increase compared to the embodiment shown in Fig. 5. Thus, the sag phenomenon of the heat exchange sheet can be prevented. There is no limitation in the size, shape and number of the communication holes 40 that can be formed in the guide ribs. Some variations in the communication holes are described below. However, any shape, number and configuration could be used to keep pressure uniform, and flow losses small.

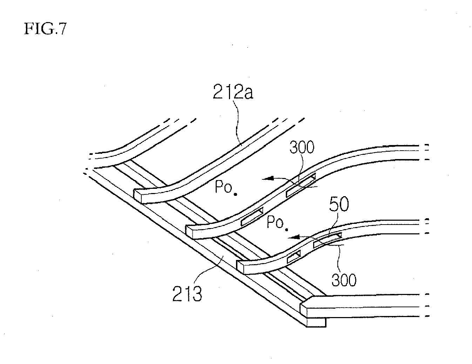

Fig. 7 is an enlarged view of the guide ribs of a heat exchange sheet according to another embodiment. Referring to Fig. 7, at least one communication hole 50, i.e., a connection passage, is provided in the guide ribs. The communication hole 50 in the guide rib at a location that is spaced apart from the upper and lower surfaces which contact the heat exchange sheets 211 and 212. As illustrated in Fig. 7, because the heat exchange sheets attached to the upper and lower surfaces of the guide ribs are continuously supported, by forming the communication hole 50 at the middle of the guide rib, it is possible to further reduce the sag phenomenon of the heat exchange sheet compared to the embodiment shown in Fig. 5 or Fig. 6.

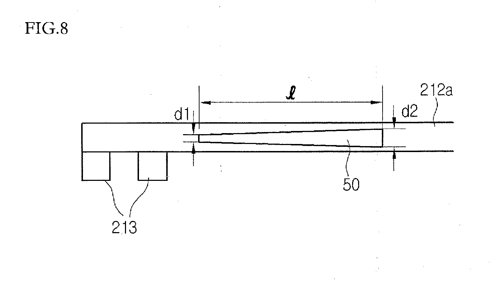

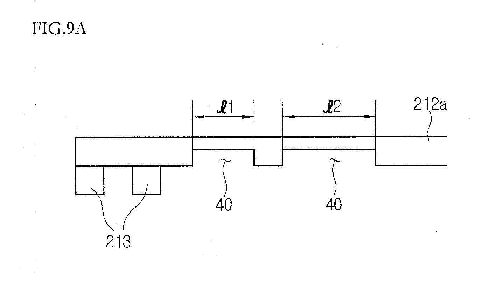

Fig. 8 and Figs. 9A to 9C show variations in the sectional widths d1 and d2 depending on a length 1 of the connection passage, and variations of lengths 11 and 12 of the connection passages depending on positions in the duct. In addition, it can be observed that an end portion of a communication hole provided in the rib may be rounded to smooth airflow in the communication hole.

Fig. 8 shows in embodiment where a connection passage 50 is substantially triangular or trapezoidal in shape. The height of the connection passage 50 varies from a distance D1 to a distance to D2 over the length of the connection passage 50.

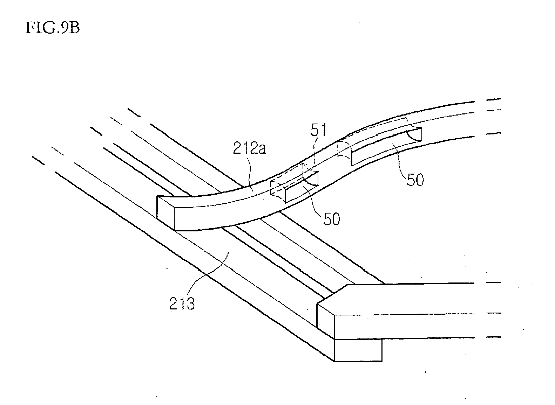

In the embodiment shown in Fig. 9A, two connection passages are formed within a guide rib 212a. However, a first connection passage has a first length L1 and a second connection passage has a second length L2 which is greater than L1. In this embodiment, the connection passageways are formed by removing the entire lower portion of the guide rib 212. However, as shown in Fig. 9B, connection passages having two different lengths could also be formed in the center of the guide rib. Fig. 9B also illustrates connection passageways 50 which have arcuate or rounded end edges. The rounding of the end edges of the connection passageways can help to maintain a uniform flow through the passageways.

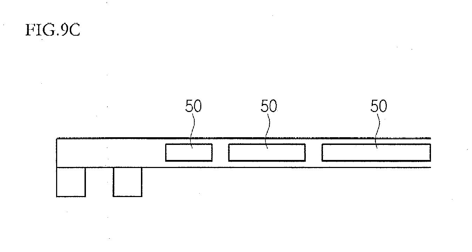

Fig. 9C illustrates an embodiment where three connection passages of differing lengths are all provided in the center sections of the guide rib.

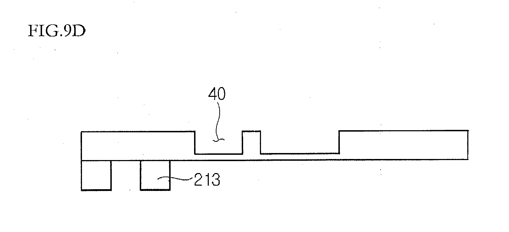

Fig. 9D illustrates an embodiment like the one shown in Fig. 9A, except that in this embodiment, the material removed from the guide rib comes from the top of the rib.

A heat exchanger of a ventilating apparatus which makes use of guide ribs with communication holes or connection holes can maintain flow rate uniformity and help to keep pressure uniform within the passageways of the heat exchanger. In addition, since the guide ribs constituting a heat exchanger are continuously formed, they provide better support to the heat exchange sheets. As a result, the sag phenomenon of the heat exchange sheet can be reduced. Furthermore, since the durability of the heat exchanger is strengthened by minimizing the sag phenomenon, the lifetime of the heat exchanger can be increased.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

## Claims

1. A heat exchanger, comprising:
a plurality of heat exchange sheets which are stacked on top of one another; and
a plurality of guide ribs positioned between the heat exchange sheets to form fluid flow ducts between adjacent heat exchange sheets, wherein an aperture is formed in at least one of the guide ribs to allow fluid flow exchange between adjacent fluid flow ducts.

2. The heat exchanger of claim 1, wherein an aperture is formed in at least one guide rib between each adjacent pair of heat exchange sheets.

3. The heat exchanger of claim 1 or 2, wherein the guide ribs are attached to the heat exchange sheets.

4. The heat exchanger of claim 3, wherein guide ribs are attached to two opposite sides of each of the heat exchange sheets.

5. The heat exchanger of claim 3 or 4, wherein the aperture is formed by removing a portion of a surface of the at least one guide rib adjacent to the heat exchange sheet to which it is attached such that the surface of the guide rib abutting the heat exchange sheet is discontinuous.

6. The heat exchanger of claim 3 or 4, wherein the aperture is formed by removing a portion of a surface of the at least one guide rib opposite the heat exchange sheet to which it is attached such that the surface of the guide rib opposite to the heat exchange sheet is discontinuous.

7. The heat exchanger of claim 3 or 4, wherein the aperture is formed in a central portion of the at least one guide rib such that the upper and lower surfaces of the guide ribs are continuous.

8. The heat exchanger of any of claims 1 to 7, wherein a plurality of apertures are formed in the at least one guide rib.

9. The heat exchanger of claim 8, wherein at least two of the plurality of apertures formed in the at least one guide rib have different lengths.

10. The heat exchanger of any of claims 1 to 9, wherein an aperture is formed in a plurality of the guide ribs located between each adjacent pair of heat exchange sheets.

11. The heat exchanger of any of claims 1 to 10, wherein a height of the aperture varies along a length of the aperture.

12. The heat exchanger of any of claims 1 to 11, wherein at least one side edge of the aperture is angled.

13. The heat exchanger of any of claims 1 to 12, wherein at least one side edge of the aperture is rounded.

14. The heat exchanger of any of claims 1 to 13, wherein the aperture is formed by removing an upper surface portion of the at least one guide rib such that the upper surface of the guide rib is discontinuous.

15. The heat exchanger of any of claims 1 to 14, wherein the aperture is formed by removing a lower surface portion of the at least one guide rib such that the lower surface of the guide rib is discontinuous.

16. The heat exchanger of any of claims 1 to 15, wherein the aperture is formed in a central portion of the at least one guide rib such that the upper and lower surfaces of the guide ribs are continuous.

17. The heat exchanger of any of claims 1 to 16, wherein a length of the aperture is greater than a height of the aperture.

18. The heat exchanger of any of claims 1 to 17, wherein the aperture is formed on the at least one guide rib at a portion of the guide rib which is curved or angled.

19. A heat exchange plate for a heat exchanger, comprising:
a heat exchange sheet; and
a plurality of guide ribs attached to at least one side of the heat exchange sheet, wherein an aperture is formed in at least one of the guide ribs to allow fluid flow exchange through the aperture.

20. The heat exchange plate of claim 19, wherein a plurality of guide ribs are formed on two opposite sides of the heat exchange sheet.

21. The heat exchange plate of claim 20, wherein the plurality of guide ribs are formed on the two opposite sides of the heat exchange sheet such that when two heat exchange plates are stacked on top of one another, the guide ribs on the bottom of the upper heat exchange plate are interposed between corresponding pairs of the guide ribs on the top of the lower heat exchange plate.

22. A heat exchanger comprising the heat exchange plate of claim 21.
